(19) Europäisches Patentamt
European Patent Office
Office européen des brevets

(11) EP 3 310 587 B1

(12) **FASCICULE DE BREVET EUROPEEN**

(45) Date de publication et mention de la délivrance du brevet:
**06.11.2019 Bulletin 2019/45**

(21) Numéro de dépôt: **16741083.6**

(22) Date de dépôt: **16.06.2016**

(51) Int Cl.:
***B60C 1/00*** (2006.01) ***C08G 81/02*** (2006.01)

(86) Numéro de dépôt international:
**PCT/FR2016/051455**

(87) Numéro de publication internationale:
**WO 2016/203156 (22.12.2016 Gazette 2016/51)**

(54) **COPOLYMÈRE ÉLASTOMÈRE THERMOPLASTIQUE À BASE D'ÉLASTOMÈRE DIÉNIQUE ET DE POLYPROPYLÈNE, COMPOSITIONS LE COMPRENANT ET PROCÉDÉ DE PRÉPARATION**

THERMOPLASTISCHES ELASTOMERCOPOLYMER AUS DIENKAUTSCHUK/POLYPROPYLEN, ZUSAMMENSETZUNGEN DAMIT UND HERSTELLUNGSVERFAHREN

DIENE RUBBER/POLYPROPYLENE THERMOPLASTIC ELASTOMER COPOLYMER, COMPOSITIONS CONTAINING SAME, AND PREPARATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2015 FR 1555637**

(43) Date de publication de la demande:
**25.04.2018 Bulletin 2018/17**

(73) Titulaire: **Compagnie Générale des Etablissements Michelin**
**63000 Clermont-Ferrand (FR)**

(72) Inventeurs:
- **DRONET, Séverin**
  **63040 Clermont Ferrand Cedex 9 (FR)**
- **THUILLIEZ, Julien**
  **63040 Clermont Ferrand Cedex 9 (FR)**

(74) Mandataire: **Bocchi, Brigitte**
**Manufacture Française des Pneumatiques Michelin**
**CBS/CORP/J/PI - F35 - Ladoux**
**23, place des Carmes - Déchaux**
**63040 Clermont-Ferrand Cedex 9 (FR)**

(56) Documents cités:
**EP-A1- 0 964 022** **EP-A1- 2 607 102**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne des copolymères à blocs en peigne associant un squelette élastomère et des blocs pendants rigides et présentant ainsi des propriétés d'élastomère thermoplastique. L'invention vise en particulier des copolymères à blocs en peignes qui peuvent être utilisés comme matériau en tant que tel.

Les matériaux à propriétés d'élastomère thermoplastique combinent les propriétés élastiques des élastomères et le caractère thermoplastique, à savoir la capacité de se ramollir et durcir, de manière réversible, sous l'action de la chaleur, des blocs pendants.

D'une manière générale, le greffage de polymère sur une chaine polyoléfine est surtout utilisé pour la préparation d'un copolymère qui jouera le rôle de compatibilisant (il sera alors utilisé en faible quantité dans une formule) pour améliorer les propriétés de coupages à base de polyoléfines.

Ainsi, le brevet US 5,342,886 décrit la fonctionnalisation d'un EPR (abréviation d'éthylène-propylène-rubber) par de l'anhydride maléique par extrusion réactive puis greffage de polyamide par extrusion réactive. Le copolymère ainsi obtenu est utilisé, en des taux minoritaires dans les compositions, pour compatibiliser des mélanges de polymères incompatibles.

Le greffage de polyamide sur une polyoléfine, pour obtenir un copolymère utilisable en tant que matériau a déjà été décrit. Ainsi, le brevet FR 2 815 037 décrit le greffage de polyamide sur des terpolymères polyéthylène-co-acrylate-co-anhydride maléique (Lotader®) par extrusion réactive pour obtenir des polyoléfines souples à propriétés de résistance thermo-mécaniques améliorées.

Dans le cadre de l'invention, on recherche un matériau à propriétés d'élastomères thermoplastique, à base principalement de monomères de grande commodité à bas coût. On recherche également un matériau qui puisse être fabriqué par un procédé continu, flexible et à bas coût, tel que par exemple par extrusion réactive. L'extrusion réactive est un procédé surtout utilisé pour les thermoplastiques, donc des polymères ayant des hautes températures de transition vitreuse ou de fusion, le cas échéant.

Descriptif des figures :

Figure 1 : Module élastique G' (en Pa) en fonction de la déformation (%) trait discontinu : ML1, trait pointillé : ML2, trait plein noir : ML3

Figure 2 : facteur de perte (tan$\delta$) en fonction de la déformation (%) trait discontinu : ML1, trait pointillé : ML2, trait plein noir : ML3

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a à b (c'est-à-dire incluant les bornes strictes a et b).

Dans la présente description, sauf indication expresse différente, tous les pourcentages (%) indiqués sont des pourcentages en masse.

Par ailleurs, le terme « pce » signifie au sens de l'invention, partie en poids pour cent parties d'élastomère total, donc y compris le copolymère élastomère thermoplastique diène/polypropylène selon l'invention.

Dans la présente description, par l'expression "le long de la chaîne" en se référant à un groupement pendant du polymère, il faut entendre que le polymère comprend des groupements pendants de ce type en plusieurs endroits de la chaîne. Ceci inclut la ou les extrémités de la chaîne mais ne se limite pas à ces emplacements. Lorsqu'un groupement est présent en au moins une extrémité de chaîne, le polymère comprend également au moins un autre groupement pendant de ce type en une autre position dans la chaîne.

Dans la présente description, par l'expression "greffon", il faut entendre le groupement latéral polypropylène fixé sur le tronc de l'élastomère diénique par greffage.

L'invention a pour objet un copolymère élastomère thermoplastique diène/polypropylène, caractérisé en ce qu'il est constitué d'un tronc, ledit tronc dérive d'un élastomère diénique, en ce qu'il comprend 5% à 50% en poids, par rapport au poids total du copolymère, de groupes polypropylène semi-cristallins pendants répartis le long du tronc.

Le copolymère élastomère thermoplastique selon l'invention comprend un tronc diénique qui lui confère des propriétés élastomériques et des blocs pendants polypropylène qui lui confèrent des propriétés thermoplastiques et élastiques.

Le copolymère élastomère thermoplastique peut aussi être dénommé TPE.

Structure du TPE (copolymère selon l'invention) :

Le TPE comprend des blocs polypropylène répartis le long du tronc. Plus particulièrement, le copolymère

comprend plus avantageusement de de 5 à 30%, encore plus avantageusement de 10 à 30% en poids par rapport au poids total du copolymère, de blocs polypropylène.
Le TPE selon l'invention supporte de très grandes déformations avant rupture mais peut s'écouler à une température supérieure à la température de fusion du polypropylène.
En particulier, le copolymère selon l'invention présente un allongement à la rupture d'au moins 140% tel que mesuré par la méthode décrite en page 22, paragraphe « tests mécaniques ».
Le copolymère peut être préparé par tout procédé adapté, en particulier par greffage Avantageusement, les blocs polypropylène semi-cristallins sont greffés sur le tronc. Ainsi, le copolymère est préparé par greffage de blocs polypropylène sur une chaîne élastomère diénique A. Pour permettre ce greffage la chaine élastomère diénique A comprend des unités fonctionnalisées.
Par « unité fonctionnalisée », on entend au sens de l'invention une unité comprenant un groupe fonctionnel pendant. Ce groupe est apte à réagir avec le groupement terminal du polypropylène fonctionnalisé.
Dans ce qui suit, on utilisera les termes :

- « élastomère diénique » pour désigner génériquement l'élastomère dont dérive le tronc du TPE selon l'invention ;
- « élastomère diénique A » pour désigner l'élastomère diénique qui comprend des unités fonctionnalisées aptes à réagir avec le groupement terminal du polypropylène fonctionnalisé ;
- « élastomère diénique B » pour désigner l'élastomère diénique qui va ensuite être fonctionnalisé pour conduire à l'élastomère diénique A.

Plus particulièrement, le copolymère élastomère thermoplastique selon l'invention est obtenu par réaction :

- d'un élastomère diénique A comprenant des groupements fonctionnels pendant le long dudit élastomère, aptes à réagir avec le groupement terminal du polypropylène ;
- de polypropylène semi-cristallin fonctionnalisé tel que décrit ci-après.

En particulier, le copolymère est obtenu par réaction

- d'un élastomère diénique A comprenant des groupements époxydes pendants le long dudit élastomère;
- de polypropylène semi-cristallin fonctionnalisé par un groupement terminal apte à réagir avec les groupements époxydes pendants de l'élastomère diénique A.

Ces copolymères sont des copolymères blocs en peigne associant un squelette élastomère diénique, qui constitue le bloc mou, et des greffons rigides, qui constituent les blocs durs. Le greffage de polypropylène permet de conférer un caractère thermoplastique au copolymère. Dans cette variante, le TPE est obtenu par réaction des fonctions présentes sur l'élastomère diénique avec le groupement terminal présent sur les greffons polypropylène.

<u>Description détaillée de l'élastomère diénique</u>

Dans ce qui suit, on décrit en détail la variante selon laquelle le TPE est préparé par greffage sur un élastomère diénique A.
L'élastomère diénique A a un taux de cristallinité compris dans un domaine allant de 0% à 10%. Avantageusement l'élastomère est amorphe.
L'élastomère diénique A présente une masse molaire moyenne en nombre allant de 10 kg/mol à 500 kg/mol de manière à conférer au TPE de bonnes propriétés élastomériques et une tenue mécanique suffisante et compatible avec l'utilisation notamment en bande de roulement de pneumatique. La masse molaire est déterminée par la méthode décrite en annexe.
L'élastomère diénique A a avantageusement une masse molaire moyenne en nombre allant de 10 kg/mol à 300 kg/mol, plus avantageusement de 30 kg/mol à 100 kg/mol
L'élastomère diénique A comprend des unités portant des groupements fonctionnels aptes à réagir avec le groupement terminal du polypropylène. Avantageusement, un tel groupement fonctionnel est choisi parmi des groupements fonctionnels époxyde, anhydride d'acide, acide carboxylique, plus particulièrement époxyde.
Dans un premier mode de réalisation, l'élastomère diénique A est le produit de la fonctionnalisation par greffage d'un élastomère diénique B. La fonctionnalisation est avantageusement une hydrosilylation. Un procédé de fonctionnalisation d'un polymère diénique avec des groupements époxydes pendants a, par exemple, été décrit dans la demande FR 13/62946.
Dans ce mode de réalisation, les groupements époxydes sont avantageusement liés à l'élastomère diénique A par l'intermédiaire d'un atome de silicium. Le groupement époxyde répond avantageusement à la formule I suivante :

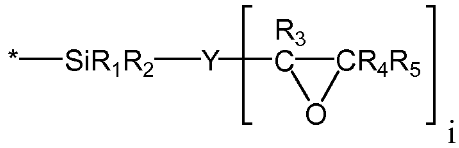

Formule I

où

- $R_1$ et $R_2$, identiques ou différents, représente chacun un groupement alkyle en $C_1$-$C_5$, aryle en $C_6$-$C_{14}$, alkyle aromatique en $C_7$-$C_{11}$;
- $R_3$, $R_4$ et $R_5$, identiques ou différents, représente chacun un atome d'hydrogène ou un groupement alkyle en $C_1$-$C_5$, aryle en $C_6$-$C_{14}$, alkyle aromatique en $C_7$-$C_{11}$, et préférentiellement un atome d'hydrogène;
- Y est un groupement pontant avec une valence égale à i+1 ; et
- i est un nombre entier d'une valeur allant de 1 à 3, et préférentiellement 1 ;
- *désigne un point de liaison avec la chaîne élastomère.

Rx désigne un ou plusieurs des $R_1$ et $R_2$, $R_3$, $R_4$ ou $R_5$.
Dans la formule I, lorsque Rx désigne un radical alkyle, celui-ci comporte 1 à 5 atomes de carbone, de préférence 1 à 4, plus préférentiellement 1 à 3 atomes de carbone. On peut citer à titre d'exemple les radicaux méthyle, éthyle et propyle. Dans la formule I, lorsque Rx désigne un radical aryle, celui-ci comporte 6 à 14 atomes de carbone. On peut citer à titre d'exemple les radicaux phényle, naphtyle et anthracényle. Dans la formule I, lorsque Rx désigne un radical alkyl aromatique, celui-ci comporte 7 à 11 atomes de carbone. On peut citer à titre d'exemple les radicaux benzyle, tolyle, xylyle.
Selon des variantes, dans la formule I, $R_3$, $R_4$ et $R_5$ sont de préférence identiques et représentent un atome d'hydrogène.
Selon d'autres variantes, dans la formule I, $R_1$ et $R_2$, identiques ou différents, désignent de préférence un groupement alkyle en $C_1$-$C_5$.

Selon d'autres variantes encore, dans la formule I, Y représente préférentiellement une chaîne hydrocarbonée, linéaire, ramifiée, cyclique, pouvant contenir un ou plusieurs radicaux aromatiques, et/ou un ou plusieurs hétéroatomes, tels que par exemple N, O ou Si. Selon un mode de réalisation préféré, le groupement pontant Y est une chaîne alkyle linéaire ou ramifiée en $C_1$-$C_{24}$, de préférence $C_1$-$C_{10}$, éventuellement interrompue par un ou plusieurs atomes de silicium et/ou d'oxygène. Plus préférentiellement Y est une chaîne alkyle linéaire en $C_1$-$C_6$ interrompue par un ou plusieurs atomes de silicium et/ou d'oxygène. Lorsque la chaîne hydrocarbonée Y comprend au moins un atome de silicium, celui-ci peut être substitué à titre préférentiel par au moins un radical alkyle en $C_1$-$C_4$, de préférence méthyle ou éthyle. Lorsque la chaîne hydrocarbonée Y comprend au moins un atome d'oxygène, celui-ci est de préférence séparé du groupement époxy par un groupement méthylène.
Dans la formule I, i vaut de préférence 1.

Selon des variantes particulièrement avantageuses, le groupement de formule I présente au moins une des quatre caractéristiques suivantes, de préférence les quatre:

- $R_1$ et $R_2$, identiques ou différents, désignent un radical alkyle en $C_1$-$C_5$, de préférence méthyle et éthyle,
- $R_3$, $R_4$ et $R_5$ sont identiques et représentent un atome d'hydrogène,
- Y est une chaîne alkyle linéaire en $C_1$-$C_6$ interrompue par au moins un atome d'oxygène séparé du groupement époxy par un groupement méthylène et par au moins un atome de silicium substitué par deux radicaux alkyle, identiques ou différents, en $C_1$-$C_5$, de préférence méthyle et éthyle,
- i vaut 1.

Ainsi, selon certaines variantes particulièrement avantageuses, le groupement de formule I répond à l'une des formules suivantes IA, IB et IC:

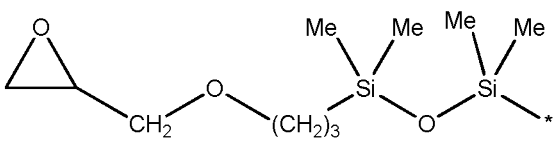

**IA**

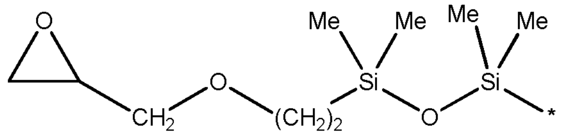

**IB**

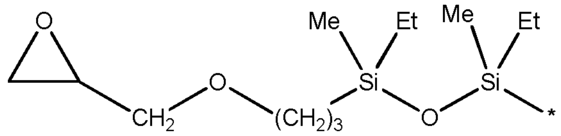

**IC**

* désignant dans chacune de ces formules un point de liaison avec la chaîne polymère.

Le taux de greffage du groupement de formule I sur l'élastomère diénique B peut être ajusté de manière connue pour l'homme du métier, en faisant varier différentes conditions opératoires, telles que notamment la quantité de molécules à greffer, la température ou encore le temps de réaction. Il est possible d'atteindre des rendements de greffage quantitatifs.

Ainsi le taux de greffage est de préférence d'au moins 0,1% molaire de groupements de formule I par rapport à l'élastomère modifié. Le taux de greffage est de préférence d'au plus 50% molaire de groupements de formule I par rapport à l'élastomère modifié, et selon certaines variantes le taux de greffage est inférieur à 20% molaire de groupements de formule I par rapport à l'élastomère modifié.

Nous allons maintenant décrire en détail l'élastomère avant fonctionnalisation, désigné pour clarifier la lecture « élastomère diénique B » ou « élastomère B ».

Par élastomère diénique, doit être compris selon l'invention tout polymère issu au moins en partie (i.e., un homopolymère ou un copolymère) de monomères diènes (monomères porteurs de deux doubles liaisons carbone-carbone, conjuguées ou non). L'élastomère diénique B selon l'invention comporte des insaturations de type double liaison carbone-carbone. L'élastomère diénique B présente de préférence entre autres insaturations, des insaturations pendantes le long de la chaîne. Selon certaines variantes, ces insaturations pendantes sont des insaturations dites d'origine vinylique. On appelle insaturations d'origine vinylique, des insaturations pendantes de la chaîne polymérique provenant d'une insertion de type vinylique du monomère diénique dans le polymère. A titre d'exemples d'insaturations d'origine vinylique, on peut citer celles provenant d'une insertion de type 1,2- par exemple du butadiène, de l'isoprène ou tout autre diène possédant une insaturation en C1 (c'est-à-dire tout autre diène dont une des doubles liaisons est terminale), ou encore d'insertions de type 3,4- de l'isoprène par exemple.

L'élastomère diénique B susceptible d'être utilisé dans l'invention est tout particulièrement un polymère diénique correspondant à l'une des catégories suivantes:

(a) tout homopolymère obtenu par polymérisation d'un monomère diène conjugué ayant de 4 à 12 atomes de carbone;
(b) tout copolymère de diène conjugué

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. On peut en particulier citer les 1,3-diènes, plus particulièrement le butadiène-1,3, le 2-méthyl-1,3-butadiène, le 2,3-diméthyl-1,3-butadiène, un aryl-1,3-butadiène, le 1,3-pentadiène. On préfère particulièrement le butadiène-1,3 ou le 2-méthyl-1,3-butadiène.

Avantageusement, l'élastomère diénique B contient des unités 1,3-diène, en particulier le butadiène ou le 2-méthyl-1,3-butadiène.

Dans l'élastomère diénique B le taux molaire d'unités issues du diène est supérieur à 10%, avantageusement supérieur ou égal à 25%. Il peut être de 100% pour un homopolymère. En particulier, l'élastomère diénique B est un homopolymère de 1,3-diène.

L'homopolymère peut être obtenu par polymérisation anionique, Ziegler Natta, radicalaire, ou avec des systèmes catalytiques à base de métallocènes (EP 1 092 733).

L'élastomère B peut être un copolymère statistique issu de la polymérisation d'un ou plusieurs diènes conjugués avec un ou plusieurs composés choisis parmi les α-monooléfine aliphatiques, α-monooléfine aromatiques et l'éthylène.

En particulier, l'élastomère B est un copolymère statistique issu de la polymérisation d'un ou plusieurs 1,3 diènes avec un ou plusieurs composés choisis parmi les $\alpha$-monooléfine aliphatiques, $\alpha$-monooléfine aromatiques et l'éthylène.

Selon une première variante, l'élastomère diénique B est un copolymère statistique issu de la polymérisation d'au moins un ou plusieurs diènes conjugués et de composés $\alpha$-monooléfine aromatiques.

De tels copolymères contiennent typiquement de 20 à 99% en poids d'unités issues de diène conjugué et de 1 à 80% en poids d'unités issues du monomère $\alpha$-monooléfine aromatique.

A titre de diènes conjugués conviennent les diènes définis précédemment, en particulier les 1,3 diènes.

A titre de monomère $\alpha$-monooléfine aromatique conviennent les composés vinylaromatiques ayant avantageusement de 8 à 20 atomes de carbone. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Préférentiellement, l'élastomère diénique B est choisi dans le groupe constitué par les polybutadiènes (BR), les polyisoprènes, en particulier les polyisoprènes de synthèse (IR), les copolymères de butadiène, les copolymères d'isoprène, et les mélanges de ces élastomères. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Ces copolymères peuvent être synthétisés par polymérisation anionique, radicalaire (par exemple émulsion ou solution) selon des procédés bien connus de l'homme du métier.

Selon une deuxième variante, l'élastomère diénique B est un copolymère statistique issu de la polymérisation d'au moins un ou plusieurs diènes conjugués et de composés $\alpha$-monooléfine aliphatiques.

A titre de diènes conjugués conviennent les diènes définis précédemment, en particulier les 1,3 diènes.

Le monomère $\alpha$-monooléfine aliphatique comprend avantageusement de 3 à 18 atomes de carbone. Les monomères $\alpha$-monooléfine aliphatiques sont avantageusement choisis parmi le propène, le butène, l'hexène et l'octène. De tels copolymères peuvent être préparés en présence de systèmes catalytiques à base de métallocène, tel que par exemple par le procédé décrit dans la demande WO 2005/028256.

Selon une troisième variante, l'élastomère diénique B est un copolymère statistique issu de la polymérisation d'au moins un ou plusieurs diènes conjugués et d'éthylène. En particulier, l'élastomère diénique B est un copolymère statistique issu de la polymérisation d'au moins un ou plusieurs 1,3 diènes et d'éthylène.

L'élastomère B comprend des unités issues de l'éthylène et des unités issues de diène conjugué comportant une double liaison carbone-carbone, lesquelles unités sont distribuées statistiquement au sein dudit élastomère.

Selon un mode de réalisation de cette variante de l'invention, les unités issues de l'éthylène, présentent dans l'élastomère B, représentent au moins 50% en mole de l'ensemble des unités monomères dudit élastomère.

Avantageusement, l'élastomère diénique B comprend des unités qui ont pour motif un cycle hydrocarboné bivalent à 6 atomes de carbone de type 1,2-cyclohexane. Le taux molaire de telles unités est avantageusement égal ou supérieur à 20%, par rapport à l'ensemble des unités issues de diène conjugué.

Selon un mode de réalisation particulier de cette variante de l'invention, l'élastomère B comprend les unités UA, UB, UC et UD suivantes distribuées statistiquement au sein dudit élastomère,

UA) $-CH_2-CH_2-$ selon un pourcentage molaire de m%

UB) $-CH_2-R_6C=CR_7-CH_2-$ selon un pourcentage molaire de n%

UC) 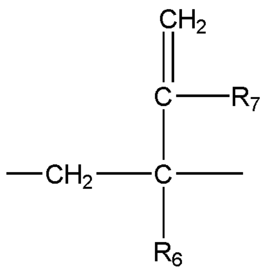 selon un pourcentage molaire de o%

(suite)

UD) 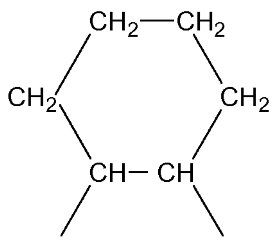 selon un pourcentage molaire de p%

$R_6$ et $R_7$, identiques ou différents, représentent chacun un atome d'hydrogène, un radical méthyle ou un radical phényle substitué ou non en position ortho, méta ou para par un radical méthyle, avantageusement $R_6$ et $R_7$ représentent chacun un hydrogène

$$m \geq 50$$

$$0 < o + p \leq 25$$

$$n + o > 0$$

m, n, o et p étant des nombres allant de 0 à 100

les pourcentages molaires respectifs de m, n, o, et p étant calculés sur la base de la somme de m + n + o + p qui est égale à 100.

Selon un autre mode de réalisation particulier de cette variante de l'invention, l'élastomère B contient également des unités UE distribuées statistiquement au sein dudit élastomère :

UE) 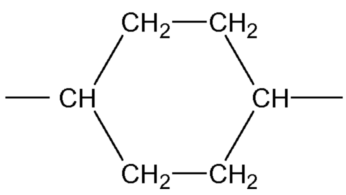 selon un pourcentage molaire de q%

$$o + p + q \geq 10$$

$$q \geq 0$$

les pourcentages molaires respectifs de m, n, o, p et q étant calculés sur la base de la somme de m + n +o + p + q qui est égale à 100.

Alors que le motif de l'unité UD forme un cycle hydrocarboné bivalent à 6 atomes de carbone de type 1,2-cyclohexane, le motif de l'unité UE forme un cycle hydrocarboné bivalent à 6 atomes de carbone de type 1,4-cyclohexane.

Selon un autre mode de réalisation de cette variante de l'invention, l'élastomère B contient également des unités UF distribuées statistiquement au sein de l'élastomère,

UF) 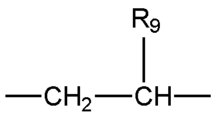 selon un pourcentage molaire de r%

$R_9$ désignant un radical alkyle ayant de 1 à 4 atomes de carbone ou un radical aryle,

0≤ r ≤25, de préférence 0≤ r ≤10,

les pourcentages molaires respectifs de m, n, o, p et r étant calculés sur la base de la somme de m+ n + o + p + r qui est égale à 100.

Selon ce mode de réalisation particulier de cette variante de l'invention, l'élastomère B peut comprendre q% d'unités UE distribuées statistiquement au sein de l'élastomère, auquel cas les pourcentages molaires respectifs de m, n, o, p, q et r sont calculés sur la base de la somme de m+ n + o + p + q + r qui est égale à 100.

Il est entendu que l'élastomère B peut être constitué par un mélange d'élastomères qui contiennent les unités UA, UB, UC, UD, UE et UF selon les pourcentages molaires respectifs m, n, o, p, q et r tels que définis précédemment et qui se différencient des uns des autres par leur macrostructure ou leur microstructure, en particulier par le taux molaire respectif des unités UA, UB, UC, UD, UE et UF.

Selon l'un quelconque des modes de réalisation de cette variante de l'invention, de préférence l'élastomère B ne contient pas d'unité UF.

Selon un mode de réalisation de cette variante l'invention, au moins l'un des deux pourcentages molaires p et q est de préférence différent de 0. Autrement dit, de préférence l'élastomère diénique B contient au moins l'un des motifs qui sont un cycle hydrocarboné bivalent à 6 atomes de carbone de type 1,2-cyclohexane et un cycle hydrocarboné bivalent à 6 atomes de carbone de type 1,4-cyclohexane. De manière plus préférentielle p est strictement supérieur à 0.

Selon un mode de réalisation de cette variante de l'invention, l'élastomère B présente au moins un des critères suivants, et préférentiellement tous :

$$m \geq 65$$

$n + o + p + q \geq 15$, de préférence encore 20

$$10 \geq p + q \geq 2$$

$$1 \geq n / (o + p + q)$$

lorsque q est non nul, $20 \geq p / q \geq 1$

Selon un autre mode de réalisation préférentiel de cette variante de l'invention, l'élastomère B contient comme unités uniquement les unités UA, UB, UC, UD et UE selon leur pourcentage molaire respectif m, n, o, p et q, de préférence tous différents de 0.

Selon un autre mode de réalisation préférentiel de cette variante de l'invention, l'élastomère B contient comme unités uniquement les unités UA, UB, UC et UD selon leur pourcentage molaire respectif m, n, o et p, de préférence tous différents de 0.

Selon l'un quelconque des modes de réalisations de cette variante de l'invention, les unités UB présentes dans l'élastomère B ont de préférence la configuration trans représentée par la formule suivante :

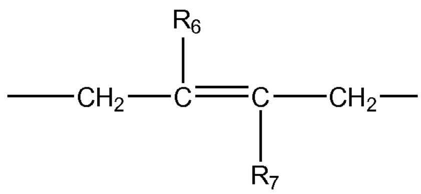

où $R_6$ et $R_7$ sont tels que définis précédemment.

L'élastomère B peut être obtenu selon différentes méthodes de synthèses connues de l'homme du métier, notamment en fonction des valeurs visées de m, n, o, p, q et r. Généralement, l'élastomère B peut être préparé par copolymérisation d'au moins un monomère diène conjugué et d'éthylène et selon des méthodes de synthèse connues, en particulier en présence de système catalytique comprenant un complexe métallocène. On peut citer à ce titre les systèmes catalytiques à base de complexes métallocènes, lesquels systèmes catalytiques sont décrits dans les documents EP 1 092 731 A1, EP 1 554 321 A1, EP 1 656 400 A1, EP 1 829 901 A1, EP 1 954 705 A1, EP 1 957 506 A1, au nom des Demanderesses.

A titre de diènes conjugués conviennent les 1,3-diènes, en particulier le butadiène-1,3.

Ainsi, selon certaines de ces méthodes de synthèse, l'élastomère B peut être obtenu par copolymérisation d'au moins un monomère diène conjugué et de l'éthylène, en présence d'un système catalytique comprenant un complexe métallocène de lanthanide avec des ligands *ansa* de type fluorényle. On peut citer à ce titre les complexes métallocènes décrits dans les documents EP 1 092 731 A1, EP 1 554 321 A1, EP 1 954 705 A1.

L'élastomère B qui contient des unités UF selon un mode de réalisation particulier de cette variante de l'invention peut être obtenu par copolymérisation d'au moins un monomère diène conjugué et de deux oléfines, telles que l'éthylène et une alpha-oléfine, en présence d'un système catalytique comprenant un complexe métallocène de lanthanide avec des ligands de type ansa cyclopentadiényle-fluorényle. A titre de monomère alpha-oléfine convient par exemple une alpha-oléfine ayant de 3 à 18 atomes de carbone, avantageusement ayant 3 à 6 atomes de carbone. On peut citer le propylène, le butène, le pentène, l'hexène ou un mélange de ces composés. Comme termonomère associé à au moins un monomère diène conjugué et l'éthylène, on peut aussi citer un dérivé du styrène. Les systèmes catalytiques à base de complexes métallocènes peuvent être ceux décrits dans les documents EP 1 092 731 A1, EP 1 656 400 A1, EP 1 829 901 A1, EP 1 957 506 A1, au nom des Demanderesses.

L'élastomère B peut être préparé conformément aux documents cités précédemment, en adaptant les conditions de polymérisation par des moyens connus de l'homme de l'art, de manière à atteindre des valeurs de masse molaire moyenne en nombre (Mn) recherchées.

Dans un deuxième mode de réalisation, le groupement fonctionnel peut être introduit par copolymérisation des monomères diènes conjugués, notamment 1,3-diène avec des monomères portant un tel groupement fonctionnel.
Ainsi, l'élastomère diénique A est avantageusement le produit de la copolymérisation d'au moins un monomère diène conjugué et d'au moins un monomère portant ledit groupement fonctionnel.
A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. On préfère particulièrement le butadiène ou le 2-méthyl-1,3-butadiène.
A titre de monomère fonctionnalisé conviennent notamment :

- les esters et éthers de glycidyle aliphatiques tels que l'allylglycidyléther, le vinylglycidyléther, le maléate et l'itaconate de glycidyle, l'acrylate et le méthacrylate de glycidyle,
- les esters et éthers de glycidyle alicycliques tels que le 2-cyclohexène-4,5-diglycidylcarboxylate, le cyclohexène-4-glycidyl carboxylate, le 5-norbornène-2- méthyl-2-glycidyl carboxylate et l'endo-cis-bicyclo(2,2,1)-5-heptène-2,3-diglycidyl dicarboxylate,
- les anhydrides maléique, itaconique, citraconique, allylsuccinique, cyclohex 4-ène- 1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1) hept 5-ène-2,2-dicarboxylique.

Peuvent également être copolymérisés, avec ces monomères, d'autres monomères, en particulier choisis parmi les monomères d'$\alpha$-monooléfine aliphatiques, des monomères $\alpha$-monooléfine aromatiques et l'éthylène, tels que définis précédemment. Ces unités sont distribuées statistiquement dans l'élastomère A.

**Description détaillée des blocs polypropylène** :

Dans ce qui suit, on décrit en détail la variante selon laquelle ces blocs sont des greffons.

Les blocs polypropylène sont semi-cristallins. Ainsi, ils ont un taux de cristallinité avantageusement compris entre 20% et 80%, plus avantageusement compris entre 50% et 70%.

Les blocs dérivent avantageusement de polymères semi-cristallins présentant une masse molaire moyenne en nombre inférieure à 10 000 g/mol, de préférence variant de 1 000 g/mol à 8 500 g/mol.

La masse molaire est mesurée selon la méthode décrite en annexe.

On utilisera pour la définition des blocs thermoplastiques la caractéristique de température de fusion (Tf) du bloc rigide thermoplastique. Cette caractéristique est bien connue de l'homme du métier.

Le bloc polypropylène a de préférence une Tf supérieure ou égale à 80°C. Préférentiellement, ce bloc thermoplastique a une Tf comprise dans un domaine variant de 80°C à 250°C. De préférence, la Tf de ce bloc polypropylène est préférentiellement de 100°C à 200°C, plus préférentiellement de 100°C à 180°C.

Avantageusement, les greffons dérivent de polymères semi-cristallins présentant une masse molaire moyenne en nombre inférieure à 10 000 g/mol, de préférence variant de 1 000 à 8 500 g/mol, et une température de fusion variant de 80°C à 250°C, plus avantageusement de 100°C à 200°C, encore plus avantageusement de 100°C à 180°C.

Les blocs dérivent avantageusement de polypropylène terminé par un groupement terminal. Avantageusement, le polypropylène n'a qu'un groupement terminal fonctionnel. Le groupement terminal apte à réagir avec les fonctions présentes sur l'élastomère est avantageusement un anhydride, en particulier l'anhydride maléique, un époxy, un acide carboxylique, ou un alcool. Avantageusement, les blocs dérivent de polymères de polypropylène semi-cristallin terminé monoanhydride maléique.

Procédé de fabrication :

L'invention a aussi pour objet un procédé de fabrication d'un copolymère selon l'invention. Dans une variante préférée de l'invention, le copolymère est préparé par greffage de blocs polypropylène sur un élastomère diénique. Le greffage peut être réalisé par tout procédé connu de l'homme de l'art, en particulier par extrusion réactive.

Dans une variante avantageuse, le procédé de fabrication comprend la réaction :

- d'un élastomère diénique A comprenant des unités issues de la polymérisation d'un diène conjugué et comprenant en outre des fonctions aptes à réagir avec le groupement terminal du polypropylène pendantes le long de la chaîne ;
- de polypropylène semi-cristallin fonctionnalisé par un groupement terminal apte à réagir avec les fonctions présentes sur l'élastomère

dans des proportions massiques : élastomère / polypropylène variant de 60/40 à 95/5 en solution ou par mise en contact à l'état fondu en absence de solvant, en particulier dans une extrudeuse.

La réaction est avantageusement réalisée dans un extrudeur-réacteur continu. On parle alors de procédé d'extrusion réactive.

Les fonctions aptes à réagir avec le groupement terminal du polypropylène sont avantageusement des fonctions époxyde.

Avantageusement, la réaction de l'élastomère avec le polypropylène est réalisée par mise en contact à l'état fondu à une température variant de 100°C à 200 °C, par exemple dans une extrudeuse.

Au cours de ce procédé, on peut également introduire des additifs, en particulier un ou des catalyseurs de la réaction de greffage. De tels catalyseurs permettent d'augmenter le taux de polypropylène greffé. Les catalyseurs peuvent être des imidazoles, en particulier le 1-butyl-2-(5'-methyl-2'-furoyl)imidazole.

Au cours de ce procédé, avantageusement au moins 10% en poids du polypropylène introduit est greffé sur l'élastomère.

Le TPE, obtenu par ce procédé, est tel que décrit précédemment. Le mélange le comprenant peut en outre comprendre du polypropylène et de l'élastomère diénique n'ayant pas réagi, le cas échéant des catalyseurs de la réaction de greffage.

L'invention a aussi pour objet le TPE obtenu par le procédé selon l'invention, précédemment décrit.

L'invention a aussi pour objet le mélange obtenu par le procédé selon l'invention, précédemment décrit. Ce mélange comprend le TPE et peut en outre comprendre du polypropylène et de l'élastomère n'ayant pas réagi, le cas échéant des catalyseurs de la réaction de greffage.

**Compositions** :

L'invention a également pour objet une composition comprenant au moins 50% en poids d'un TPE selon l'invention. L'invention a aussi pour objet une composition comprenant le mélange obtenu par le procédé selon l'invention, avantageusement en une quantité d'au moins 50% en poids. En particulier, le TPE ou le mélange selon l'invention peut

être le polymère majoritaire en poids de la composition voire le seul polymère de la composition.
La composition est avantageusement une composition de caoutchouc, en particulier une composition utilisable dans la fabrication d'un pneumatique. Le TPE ou le mélange selon l'invention est particulièrement utile pour la préparation de compositions pour bande de roulement. Le TPE ou le mélange selon l'invention permet de fabriquer une bande de roulement permettant d'obtenir un très bon compromis des performances en adhérence et en résistance au roulement.
Si d'éventuels autres élastomères sont utilisés dans la composition, le ou les TPE conformes à l'invention ou les élastomères du mélange selon l'invention constituent la fraction majoritaire en poids ; ils représentent alors au moins 65%, de préférence au moins 70% en poids, plus préférentiellement au moins 75% en poids de l'ensemble des élastomères présents dans la composition. De manière préférentielle également, le ou les TPE selon l'invention ou les élastomères du mélange selon l'invention (TPE + élastomère n'ayant pas réagi) représentent au moins 95% (en particulier 100%) en poids de l'ensemble des élastomères présents dans la composition.
Ainsi, la quantité de TPE conforme à l'invention ou d'élastomères du mélange selon l'invention est comprise dans un domaine qui varie de 65 à 100 pce, préférentiellement de 70 à 100 pce et notamment de 75 à 100 pce. De manière préférentielle également, la composition contient de 95 à 100 pce de TPE selon l'invention ou d'élastomères du mélange selon l'invention. Le ou les TPE selon l'invention ou les élastomères du mélange selon l'invention sont préférentiellement le ou les seuls élastomères de la composition de caoutchouc, en particulier de la bande de roulement.
Le ou les TPE selon l'invention ou le mélange selon l'invention sont suffisants à eux seuls pour que soit utilisable la bande de roulement selon l'invention.
La composition selon l'invention, peut comporter en outre au moins un (c'est-à-dire un ou plusieurs) autre caoutchouc diénique à titre d'élastomère non thermoplastique.
Le taux total de cet autre caoutchouc diénique additionnel, optionnel, est compris dans un domaine variant de 0 à 35 pce, préférentiellement de 0 à 30 pce, plus préférentiellement de 0 à 25 pce, et plus préférentiellement encore de 0 à 5 pce. De manière très préférentielle également, la composition selon l'invention ne contient pas d'autre caoutchouc diénique additionnel.
Par deuxième élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).
Par deuxième élastomère diénique, doit être compris selon l'invention tout élastomère synthétique issu au moins en partie de monomères diènes. Plus particulièrement, par deuxième élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques . A titre de diènes conjugués utilisables dans le procédé conforme à l'invention conviennent notamment le butadiène-1,3, le 2-méthyl-1,3-butadiène, les 2,3 di(alcoyle en C1 à C5)-1,3- butadiène tels que par exemple le 2,3-diméthyl-1,3-butadiène, 2,3-diéthyl-1,3-butadiène, 2- méthyl-3-éthyl-1,3-butadiène, le 2-méthyl-3-isopropyl-1,3-butadiène, le phényl-1,3- butadiène, le 1,3-pentadiène, le 2,4 hexadiène, etc.
Le deuxième élastomère diénique de la composition conforme à l'invention est choisi préférentiellement dans le groupe des élastomères diéniques constitué par les polybutadiènes, les polyisoprènes de synthèse, le caoutchouc naturel, les copolymères de butadiène, les copolymères d'isoprène et les mélanges de ces élastomères. De tels copolymères sont plus préférentiellement choisis dans le groupe constitué par les copolymères du styrène (SBR, SIR et SBIR), les polybutadiènes (BR) et le caoutchouc naturel (NR).

Charge nanométrique ou renforçante

Le ou les TPE ou le mélange selon l'invention sont suffisants à eux seuls pour que soit utilisable la composition selon l'invention, en particulier la bande de roulement.
Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.
Pour coupler la charge inorganique renforçante à l'élastomère, on peut par exemple utiliser un agent de couplage (ou agent de liaison) au moins bifonctionnel destiné à assurer une connexion suffisante, de nature chimique et/ou physique, entre la charge inorganique (surface de ses particules) et l'élastomère selon l'invention, en particulier des organosilanes ou des polyorganosiloxanes bifonctionnels.

Plastifiants

Le ou les TPE ou le mélange selon l'invention sont suffisants à eux seuls pour que soit utilisable la composition

selon l'invention, en particulier la bande de roulement.
Toutefois, selon un mode de réalisation préférentiel de l'invention, la composition peut en outre comporter également, un agent plastifiant, tel qu'une huile (ou huile plastifiante ou huile d'extension) ou une résine plastifiante dont la fonction est de faciliter la mise en œuvre de la bande de roulement, particulièrement son intégration au pneumatique par un abaissement du module et une augmentation du pouvoir tackifiant.

Additifs divers

La composition peut en outre comporter par ailleurs les divers additifs usuellement présents dans les compositions pour pneumatiques, en particulier les bandes de roulements, connues de l'homme du métier. On choisira par exemple un ou plusieurs additifs choisis parmi les agents de protection tels que antioxydants ou antiozonants, anti-UV, les divers agents de mise en œuvre ou autres stabilisants, ou encore les promoteurs aptes à favoriser l'adhésion au reste de la structure de l'objet pneumatique. De manière préférentielle, la composition ne contient pas tous ces additifs en même temps et de manière encore plus préférentielle, la composition ne contient aucun de ces agents.
Dans une variante avantageuse de l'invention, on citera tout particulièrement des agents antioxydant, des agents de nucléation, Les agents de nucléation peuvent en particulier être choisi parmi 1,3,5-Tris(2,2-dimethylpropionylamino)benzene, les amides décrits dans le brevet US 7790793 B2, 1,2,3-trideoxy-4,6 :5,7-bis-O-[(4-propylphenyl)methylene]-nonitol (TBPMN), Milliken Hyperform® HPN-20, Milliken Hyperform® HPN-68L, Milliken Hyperform® HPN-600ei, Milliken Millad® NX™ 8000.

Egalement et à titre optionnel, la composition peut contenir un système de réticulation connu de l'homme du métier. Préférentiellement, la composition ne contient pas de système de réticulation. De la même manière, la composition peut contenir une ou plusieurs charges micrométriques, inertes telles que les charges lamellaires connues de l'homme de l'art. De préférence, la composition ne contient pas de charge micrométrique.

L'invention a aussi pour objet un pneumatique dont un de ses éléments constitutifs comprend une composition selon l'invention. Cet élément constitutif est avantageusement la bande de roulement.
Cette bande de roulement peut-être montée sur un pneumatique de manière classique, ledit pneumatique comprenant en plus de la bande de roulement selon l'invention, un sommet, deux flancs et deux bourrelets, une armature de carcasse ancrée aux deux bourrelets, et une armature de sommet. Optionnellement, le pneumatique selon l'invention peut comprendre en outre une sous-couche ou une couche d'adhésion entre la portion sculptée de la bande de roulement et l'armature de sommet.
L'invention a en particulier pour objet un pneumatique comprenant une bande de roulement, un sommet avec une armature de sommet, deux flancs, deux bourrelets, une armature de carcasse ancrée aux deux bourrelets et s'étendant d'un flanc à l'autre, dans lequel la bande de roulement comprend au moins un élastomère thermoplastique, ledit élastomère thermoplastique étant un copolymère selon l'invention, et le taux total d'élastomère thermoplastique étant compris dans un domaine variant de 65 à 100 pce (parties en poids pour cent parties d'élastomère).

Préparation

Les TPE ou le mélange selon l'invention peuvent être mis en œuvre de façon classique pour des TPE, par extrusion ou moulage, par exemple à partir d'une matière première disponible sous la forme de billes ou de granulés.
La bande de roulement pour le pneumatique selon l'invention peut être préparée par incorporation des différents composants dans un mélangeur, puis utilisation d'une filière permettant de réaliser le profilé. La bande de roulement est ensuite sculptée dans le moule de cuisson du pneumatique. Les différents composants peuvent par exemple être le polypropylène fonctionnel et l'élastomère diénique selon l'invention, décrits précédemment, le cas échéant des catalyseurs de la réaction de greffage et/ou un ou plusieurs des autres additifs décrits précédemment. Les différents composants peuvent également être le TPE selon l'invention ou un mélange selon l'invention, un deuxième caoutchouc diénique tel que décrits précédemment et le cas échéant un ou plusieurs des autres additifs décrits précédemment.
Le mélangeur peut par exemple être une extrudeuse bi-vis, de façon à réaliser la fusion de la matrice et des greffons et une incorporation de tous les ingrédients.

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les annexes jointes.

Mesures et tests utilisés

1. Chromatographie d'exclusion stérique

Préparation du polymère: Il n'y a pas de traitement particulier de l'échantillon de polymère avant analyse. Celui-ci est simplement solubilisé, dans du (tétrahydrofurane + 1%vol. d'eau distillée), à une concentration d'environ 1 g/L. Puis la solution est filtrée sur filtre de porosité 0,45µm avant injection.
Analyse SEC: L'appareillage utilisé est un chromatographe « WATERS alliance ». Le solvant d'élution est du tétrahydrofurane. Le débit est de 0,7 mL/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».
Le volume injecté de la solution de l'échantillon de polymère est 100 µL. Le détecteur est un réfractomètre différentiel « WATERS 2410 » et le logiciel d'exploitation des données chromatographiques est le système « WATERS EMPOWER».
Les masses molaires moyennes calculées sont relatives à une courbe d'étalonnage réalisée à partir de polystyrènes étalons commerciaux « PSS READY CAL-KIT ».
Les conditions sont adaptables par l'homme du métier.

2. Détermination de la distribution de masses molaires des greffons PP par Chromatographie d'Exclusion Stérique Haute Température (HT-SEC) :

Les analyses HT-SEC sont effectuées sur un système Viscotek (Malvern Instruments) équipé de 3 colonnes (Polefin 300 mm x 8 mm I. D. from Polymer Standards Service, porosity of 1 000 Å, 100 000 Å and 1 000 000 Å). 200µL d'une solution à une concentration de 5mg/mL de polymère est élué dans le 1,2,4-trichlorobenzene à un débit de 1mL/min à 150°C. La phase mobile est stabilisée avec du 2,6-di(tert-butyl)-4-methylphenol (200 mg.L-1). Une détection en ligne est utilisée avec un détecteur différentiel d'indice de réfraction (RI), un détecteur par diffusion de la lumière (LS) à faible angle (7°, LALS) et angle droit (90°, RALS) et un viscosimètre différentiel à 4 capillaires.

- Une courbe de calibration conventionnelle, obtenue avec des étalons polyéthylène (Polymer Standards Service, Mainz, Germany) allant de 500 à 100 000 g.mol-1, est utilisée pour calculer la distribution de masse molaire des échantillons.
- Les masses molaires moyennes en nombre absolues sont calculées à partir des signaux des détecteurs RALS/LALS et RI et en utilisant l'increment d'indice (dn/dc) du polyéthylène.

Le logiciel OmniSEC 5.02 de Malvern Instrument est utilisé pour les calculs.
La méthode est décrite dans la référence Macromol. Symp. 2013, 330, 42-52.

3. Viscosité :

La viscosité Mooney ML (1+4) à 100° C est mesurée selon la norme ASTM D-1646 avec un consistomètre oscillant. La mesure de la viscosité Mooney se fait selon le principe suivant : l'échantillon analysé à l'état cru (i.e., avant cuisson) est moulé (mis en forme) dans une enceinte cylindrique chauffée à une température donnée (par exemple 35°C ou 100°C). Après une minute de préchauffage, le rotor tourne au sein de l'éprouvette à 2 tours/minute et on mesure le couple utile pour entretenir ce mouvement après 4 minutes de rotation.

4. Méthode de mesure du taux de polypropylène PP greffé par RMN

La quantité de polypropylène greffé est déterminée par RMN avec rotation à l'angle magique (HR-MAS) dans un solvant de l'élastomère diénique avant la réaction de greffage, par exemple le chloroforme deuteré. Les échantillons (environ 10mg d'élastomère) sont introduits dans un rotor avec 90µL de chloroforme deuteré. Les spectres sont acquis sur un spectromètre Avance 500 MHz Bruker équipé d'une sonde dual 1H/13C HRMAS z-grad 4 mm Bruker. L'expérience RMN 1H quantitative utilise une séquence simple impulsion 30° et un délai de répétition de 5 secondes entre chaque acquisition. 128 accumulations sont réalisées à température ambiante.
Cette méthode permet de différencier le polypropylène libre du polypropylène greffé, en effet seul le polypropylène greffé est observé. Il est vérifié au préalable sur un mélange témoin non réactif contenant un polypropylène qui diffère du polypropylène utilisé dans la réaction de greffage en ce qu'il n'est pas fonctionnel, et la matrice diènique qu'aucun signal du polypropylène n'est observé.
Les signaux suivants correspondant au polypropylène greffé sont observés:

- les motifs -CH- (δ1H=1.54ppm, 513C=28.9ppm),
- les motifs -CH2- (δ1H=1.17 et 0.78ppm, 513C=45.4ppm)
- les motifs -CH3 (δ1H=0.83ppm, δ13C=20.1ppm).

L'intégration des signaux des protons du polypropylène est réalisée entre 0.9 et 0.4ppm comptant pour 4 protons, après

avoir retranché les signaux issus de la matrice diènique présents dans cette zone (CH3 terminaux).

5. Tests mécaniques :

La contrainte à la rupture (MPa), l'allongement à la rupture (%) sont mesurés par des essais de traction selon la norme française NF T 46-002 de septembre 1988. Toutes ces mesures de traction sont effectuées dans les conditions normales de température (23 ±2.deg.C) et d'hygrométrie (50 ±5% d'humidité relative), selon la norme française N F T 40-101 (décembre 1979). Les mesures sont effectuées sur des éprouvettes H2 à une vitesse de traction de 500mm/min. La déformation est mesurée en suivant le déplacement de la traverse.

6. Méthode de mesure des propriétés dynamiques

Les propriétés dynamiques des matériaux (G' et tanδ) ont été mesurées sur une DMA+ 450 de chez Metravib en cisaillement sinusoïdale à une fréquence de 10Hz et à une température de 23°C. Les mesures sont conduites à déformation imposée en effectuant un balayage en déformation de 0,1 à 50% aller et retour. Les éprouvettes utilisées sont constituées de 2 disques de matière de 10mm de diamètre et 2mm d'épaisseur collées entre des cylindres métalliques de 10mm d'épaisseur et 10mm de diamètre avec une colle de type cyanoacrylate. Avant cela, les échantillons sont moulés à 160°C (diamètre 25mm, épaisseur 2mm) pendant 5 minutes, puis découpés à un diamètre de 10mm avec un emporte-pièce.
Le module de conservation élastique G', le module visqueux G" et le facteur de perte tanδ sont mesurés.

7. Méthode de mesure du taux de cristallinité

La norme ISO 11357-3 :2011 est utilisée pour déterminer la température et l'enthalpie de fusion et de cristallisation des polymères utilisés par analyse calorimétrique différentielle (DSC). L'enthalpie de référence du PP est de 148J/g (d'après Polymer 43 (2002), 2671-2676).

Exemple de réalisation

On utilise les abréviations suivantes :

| | |
|---|---|
| Elastomère A | élastomère diénique comprenant des fonctions glycidyle |
| PPanh | polypropylène fonctionnel anhydride bout de chaine |
| TPE | produit de la réaction de greffage du polypropylène sur l'élastomère à base d'éthylène |
| % PB 1,2 : | taux molaire de motifs 1,2- (vinyliques) |
| % PB 1,4 : | taux molaire de motifs 1,4 |
| % cycles : | taux molaire de motifs cycliques |

On utilise dans les exemples qui suivent le copolymère obtenu par greffage d'un élastomère diénique et de polypropylène.
L'élastomère diénique est un copolymère d'unités 1,3-diène et d'unités éthylène modifié par du 3-(glycidoxy)propyltétradiméthylsilane pour obtenir des fonctions époxydes pendantes.
Les propriétés de cet élastomère sont reportées dans le tableau suivant :

Tableau 1

| **avant modification par hydrosilylation** | |
|---|---|
| **MICROSTRUCTURE** | |
| Mol % Ethylène : | 68,0% |
| % PB 1,2 : | 8,4% |
| % PB 1,4 : | 13,4% |
| % cycles : | 10,2% |
| **SEC** | |
| Mn (g/mol) : | 164044 |
| Mw (g/mol) : | 283095 |

(suite)

| Viscosité | |
|---|---|
| Viscosité Mooney ML1+4 | 32 |
| **après modification par hydrosilylation** | |
| **Fonctionnalité** | |
| époxyde (RMN) | 8,8mol% |

Greffons rigides : Polypropylène isotactique fonctionnel anhydride maléique bout de chaine (Baker&Hughes X-10082 Polypropylene Maleic Terminated Polymer), ayant les propriétés suivantes :

Tableau 2

| Mn (g/mol) (étalon PE) | Ip | Point de fusion (DSC, °C) | Cristalinité |
|---|---|---|---|
| 2250 | 2,31 | 136,62 (méthode BWM116) | 59,8% (ISO 11357-3 :2011) |

Les copolymères greffés TPE sont réalisés par introduction de l'élastomère A dans une micro-extrudeuse (DSM Xplore) chauffée à la température indiquée dans le tableau 3 puis du polypropylène terminé anhydride (PPanh), environ 1 minute après. La vitesse de rotation des vis est de 100 ou 200 tours par minute. Cette micro-extrudeuse contient une boucle de recirculation de la matière fondue pour ajuster le temps de séjour. Le temps de séjour est fixé à 20 min maximum. Le volume de l'extrudeuse est fixé à $15cm^3$ rempli avec 13,5g de matière au total.
Les quantités massiques (en grammes) d'élastomère A et PPanh introduites dans l'extrudeuse sont données dans le tableau suivant :

Tableau 3

| Fractions massiques | ML1 | ML2 | ML3 |
|---|---|---|---|
| Elastomère A | 90 | 80 | 70 |
| PPanh | 10 | 20 | 30 |
| Température (°C) | 180 | 210 | 180 |
| Vitesse rotation vis (rpm) | 100 | 200 | 100 |

L'analyse RMN HR-MAS permet de quantifier le PPanh greffé sur le squelette Elastomère A . Les analyses présentées dans le tableau suivant, montrent jusqu'à 29% de PP greffé pour ML2 :

Tableau 4

| Fractions massiques | % massique PPanh introduit | Rendement de la réaction de greffage (PPgreffé sur PPanh introduit) |
|---|---|---|
| ML1 | 10 | 12% |
| ML2 | 20 | 29% |
| ML3 | 30 | 18% |

Compte-tenu du taux d'élastomère greffé, ces résultats correspondent à un taux de PP dans le TPE d'au moins 5%.

Les propriétés mécaniques à grandes déformations sont mesurées et reportées dans le tableau suivant :

Tableau 5

| | Contrainte rupture (Mpa) | Allongement rupture (%) |
|---|---|---|
| ML1 | 0,6 | 290 |
| ML2 | 3,6 | 230 |

(suite)

| | Contrainte rupture (Mpa) | Allongement rupture (%) |
|---|---|---|
| ML3 | 2,6 | 150 |

Les propriétés dynamiques des matériaux, module élastique (G') et facteur de perte (tan$\delta$), sont présentées sur les courbes des figures 1 et 2.
Les valeurs de G' (MPa) à 0,1, 10 et 50% de déformation sur le cycle retour sont présentées dans le tableau suivant :

Tableau 6

| | ML1 | ML2 | ML3 |
|---|---|---|---|
| Déformation (%) | G' (MPa) | G' (MPa) | G' (MPa) |
| 0,1 | 1,6 | 3,7 | 5,8 |
| 10 | 1,2 | 1,7 | 2,4 |
| 50 | 0,9 | 1,4 | 1,8 |

Les valeurs de tan ($\delta$) à 0,1, 10 et 50% de déformation sur le cycle retour sont présentées dans le tableau suivant :

Tableau 7

| | ML1 | ML2 | ML3 |
|---|---|---|---|
| Déformation (%) | tan ($\delta$) | tan ($\delta$) | tan ($\delta$) |
| 0,1 | 0,14 | 0,08 | 0,1 |
| 10 | 0,15 | 0,14 | 0,14 |
| 50 | 0,22 | 0,41 | 0,25 |

On observe un renforcement (augmentation de G') des matériaux proportionnel à la quantité de PPanh introduit dans l'extrudeuse.
La valeur de tan ($\delta$) à 23°C à 10% de déformation est représentative de la performance de résistance au roulement d'un matériau en pneumatique. Pour tous ces matériaux, la valeur est inférieure à 0,15 pour une rigidité comprise entre 1 et 2MPa.

## Revendications

1. Copolymère élastomère thermoplastique diène/polypropylène, **caractérisé en ce qu'**il est constitué d'un tronc, ledit tronc dérive d'un élastomère diénique, **en ce qu'**il comprend de 5% à 50% en poids, par rapport au poids total du copolymère, de groupes polypropylène semi-cristallins pendants répartis le long du tronc.

2. Copolymère élastomère thermoplastique selon la revendication 1, caractérisé en ce les groupes polypropylène semi-cristallins sont greffés sur le tronc et le copolymère est obtenu par réaction :

   - d'un élastomère diénique A comprenant des groupements fonctionnels pendant le long dudit élastomère, aptes à réagir avec le groupement terminal du polypropylène, en particulier des groupements époxyde;
   - de polypropylène semi-cristallin fonctionnalisé par un groupement terminal apte à réagir avec les groupements fonctionnels pendants de l'élastomère diénique.

3. Copolymère élastomère thermoplastique selon la revendication 2, **caractérisé en ce que** l'élastomère diénique A est le produit de la copolymérisation d'au moins un monomère diène conjugué et d'au moins un monomère portant ledit groupement fonctionnel.

4. Copolymère élastomère thermoplastique selon la revendication 2, **caractérisé en ce que** l'élastomère diénique A est le produit de la fonctionnalisation par greffage d'un élastomère diénique B.

**5.** Copolymère élastomère thermoplastique selon la revendication 4, **caractérisé en ce que** les groupements époxydes sont liés à l'élastomère diénique A par l'intermédiaire d'un atome de silicium et **en ce que** ledit groupement époxyde répond à la formule I suivante :

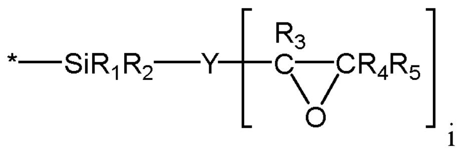

Formule I

où

- $R_1$ et $R_2$, identiques ou différents, représente chacun un groupement alkyle en $C_1$-$C_5$, aryle en $C_6$-$C_{14}$, alkyle aromatique en $C_7$-$C_{11}$;
- $R_3$, $R_4$ et $R_5$, identiques ou différents, représente chacun un atome d'hydrogène ou un groupement alkyle en $C_1$-$C_5$, aryle en $C_6$-$C_{14}$, alkyle aromatique en $C_7$-$C_{11}$, et préférentiellement un atome d'hydrogène;
- Y est un groupement pontant avec une valence égale à i+1 ; et
- i est un nombre entier d'une valeur allant de 1 à 3, et préférentiellement 1;
- *désigne un point de liaison avec la chaîne élastomère.

**6.** Copolymère élastomère thermoplastique selon l'une quelconque des revendications 4 à 5, **caractérisé en ce que** l'élastomère diénique B contient des unités 1,3-diène, en particulier le butadiène ou le 2-méthyl-1,3-butadiène.

**7.** Copolymère élastomère thermoplastique selon l'une quelconque des revendications 4 à 6, **caractérisé en ce que** l'élastomère diénique B est choisi parmi :

- un homopolymère de 1,3-diène ;
- un copolymère statistique issu de la polymérisation d'un ou plusieurs diènes 1,3 avec un ou plusieurs composés choisis parmi les $\alpha$-monooléfine aliphatiques, $\alpha$-monooléfine aromatiques et l'éthylène.

**8.** Copolymère élastomère thermoplastique selon la revendication 7, **caractérisé en ce que** l'élastomère diénique B est un copolymère statistique issu de la polymérisation d'au moins un ou plusieurs diènes 1,3 et d'éthylène et **en ce qu'**il comprend des unités qui ont pour motif un cycle hydrocarboné bivalent à 6 atomes de carbone de type 1,2-cyclohexane.

**9.** Copolymère élastomère thermoplastique selon la revendication 8, **caractérisé en ce que** l'élastomère diénique B comprend les unités UA, UB, UC et UD suivantes, distribuées statistiquement au sein de l'élastomère,

UA) $-CH_2-CH_2-$ selon un pourcentage molaire de m%

UB) $-CH_2-R_6C=CR_7-CH_2-$ selon un pourcentage molaire de n%

UC) 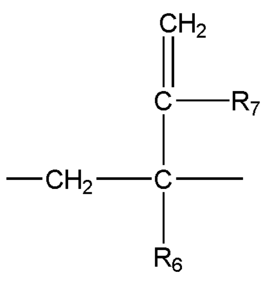 selon un pourcentage molaire de o%

(suite)

UD) 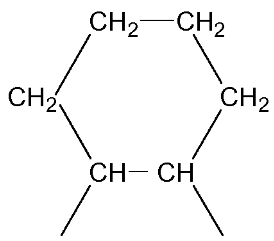 selon un pourcentage molaire de p%

$R_6$ et $R_7$, identiques ou différents, représentent chacun un atome d'hydrogène, un radical méthyle ou un radical phényle substitué ou non en position ortho, méta ou para par un radical méthyle,

$$m \geq 50$$

$$0 < o + p \leq 25$$

$$n + o > 0$$

m, n, o et p étant des nombres allant de 0 à 100

les pourcentages molaires respectifs de m, n, o, et p étant calculés sur la base de la somme de m + n + o + p qui est égale à 100.

**10.** Copolymère élastomère thermoplastique selon la revendication 9, **caractérisé en ce que** l'élastomère diénique B comprend en outre des unités UE distribuées statistiquement au sein de l'élastomère :

UE) 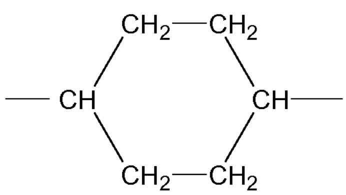 selon un pourcentage molaire de q%

$$o + p + q \geq 10$$

$$q \geq 0$$

les pourcentages molaires respectifs de m, n, o, p et q étant calculés sur la base de la somme de m + n +o + p + q qui est égale à 100.

**11.** Copolymère élastomère thermoplastique selon la revendication 9 ou 10, **caractérisé en ce que** l'élastomère diénique B comprend en outre des unités UF distribuées statistiquement au sein de l'élastomère :

UF) 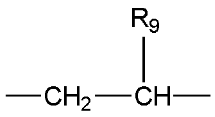 selon un pourcentage molaire de r%

$R_9$ désignant un radical alkyle ayant de 1 à 4 atomes de carbone ou un radical aryle,
0≤ r ≤25, de préférence 0≤ r ≤10,
les pourcentages molaires respectifs de m, n, o, p et r, et éventuellement q, étant calculés sur la base de la somme de m+ n + o + p + r + éventuellement q qui est égale à 100.

**12.** Copolymère selon l'une quelconque des revendications précédentes dans lequel l'élastomère diénique présente une masse molaire moyenne en nombre allant de 10 kg/mol à 500 kg/mol.

**13.** Copolymère élastomère thermoplastique selon l'une quelconque des revendications 2 à 12, **caractérisé en ce que** les greffons dérivent de polymères de polypropylène isotactique terminé monoanhydride maléique.

**14.** Copolymère élastomère thermoplastique selon l'une quelconque des revendications 2 à 13, **caractérisé en ce que** les greffons dérivent de polymères semi-cristallins présentant une masse molaire moyenne en nombre inférieure à 10000 g/mol, de préférence variant de 1000 à 8500 g/mol, et une température de fusion variant de 100°C à 180°C.

**15.** Procédé de fabrication d'un copolymère selon l'une des revendications 1 à 14, **caractérisé en ce qu'**il comprend la réaction

- d'un élastomère diénique A comprenant des unités issues de la polymérisation d'un diène conjugué et comprenant en outre des fonctions aptes à réagir avec le groupement terminal du polypropylène pendantes le long de la chaîne ;
- de polypropylène semi-cristallin fonctionnalisé par un groupement terminal apte à réagir avec les fonctions présentes sur l'élastomère

dans des proportions massiques élastomère / polypropylène variant de 60/40 à 95/5 en solution ou par mise en contact à l'état fondu en absence de solvant, en particulier dans une extrudeuse.

**16.** Composition comprenant au moins 50% en masse d'un copolymère selon l'une quelconque des revendications 1 à 14 ou obtenu par le procédé selon la revendication 15.

**17.** Composition comprenant le mélange obtenu par le procédé selon la revendication 15.

**18.** Pneumatique dont un de ses éléments constitutifs comprend une composition selon la revendication 16 ou 17.

## Patentansprüche

**1.** Thermoplastisches elastomeres Dien/Polypropylen-Copolymer, **dadurch gekennzeichnet, dass** es aus einer Hauptkette besteht, wobei sich die Hauptkette von einem Dienelastomer ableitet, und dass es 5 bis 50 Gew.-%, bezogen auf das Gesamtgewicht des Copolymers, seitenständige teilkristalline Polypropylengruppen, die entlang der Hauptkette verteilt sind, umfasst.

**2.** Thermoplastisches elastomeres Copolymer nach Anspruch 1, **dadurch gekennzeichnet, dass** die teilkristallinen Polypropylengruppen auf die Hauptkette aufgepfropft sind und das Polymer durch Umsetzung von

- einem Dienelastomer A mit seitenständigen funktionellen Gruppen entlang des Elastomers, die mit der Endgruppe des Polypropylens reagieren können, insbesondere Epoxidgruppen;
- teilkristallinem Polypropylen, das mit einer Endgruppe funktionalisiert ist, die mit den seitenständigen funktionellen Gruppen des Dienelastomers reagieren kann,

erhalten wird.

3. Thermoplastisches elastomeres Copolymer nach Anspruch 2, **dadurch gekennzeichnet, dass** es sich bei dem Dienelastomer A um das Produkt der Copolymerisation von mindestens einem konjugierten Dienmonomer und mindestens einem Monomer, das die funktionelle Gruppe trägt, handelt.

4. Thermoplastisches elastomeres Copolymer nach Anspruch 2, **dadurch gekennzeichnet, dass** es sich bei dem Dienelastomer A um das Produkt der Funktionalisierung eines Dienelastomers B durch Pfropfen handelt.

5. Thermoplastisches elastomeres Copolymer nach Anspruch 4, **dadurch gekennzeichnet, dass** die Epoxidgruppen über ein Siliciumatom an das Dienelastomer A gebunden sind und dass die Epoxidgruppe der folgenden Formel I entspricht:

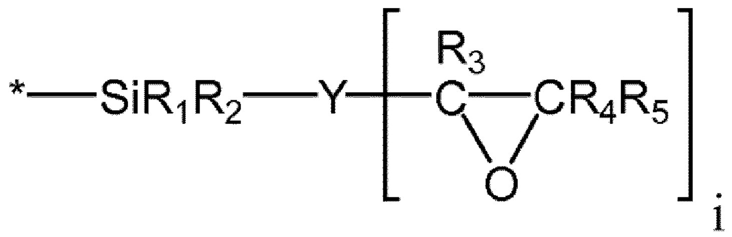

Formel I

wobei

- $R_1$ und $R_2$ gleich oder verschieden sind und jeweils für eine $C_1$-$C_5$-Alkylgruppe, $C_6$-$C_{14}$-Arylgruppe oder $C_7$-$C_{11}$-Alkylaromatengruppe stehen;
- $R_3$, $R_4$ und $R_5$ gleich oder verschieden sind und jeweils für ein Wasserstoffatom oder eine $C_1$-$C_5$-Alkylgruppe, $C_6$-$C_{14}$-Arylgruppe oder $C_7$-$C_{11}$-Alkylaromatengruppe und vorzugsweise ein Wasserstoffatom stehen;
- Y für eine Brückengruppe mit einer Wertigkeit von i + 1 steht; und
- i für eine ganze Zahl mit einem Wert von 1 bis 3 und vorzugsweise 1 steht;
- * den Verknüpfungspunkt mit der elastomeren Kette anzeigt.

6. Thermoplastisches elastomeres Copolymer nach einem der Ansprüche 4 bis 5, **dadurch gekennzeichnet, dass** das Dienelastomer B 1,3-Dieneinheiten, insbesondere Butadien oder 2-Methyl-1,3-butadien, enthält.

7. Thermoplastisches elastomeres Copolymer nach einem der Ansprüche 4 bis 6, **dadurch gekennzeichnet, dass** das Dienelastomer B aus

- einem 1,3-Dien-Homopolymer;
- einem statistischen Copolymer aus der Polymerisation von einem oder mehreren 1,3-Dienen mit einer oder mehreren Verbindungen, die aus aliphatischen $\alpha$-Monoolefinen, aromatischen $\alpha$-Monoolefinen und Ethylen ausgewählt sind,

ausgewählt ist.

8. Thermoplastisches elastomeres Copolymer nach Anspruch 7, **dadurch gekennzeichnet, dass** es sich bei dem Dienelastomer B um ein statistisches Copolymer aus der Polymerisation von mindestens einem oder mehreren 1,3-Dienen und Ethylen handelt und dass es Einheiten umfasst, die als Untereinheit einen zweiwertigen Kohlenwasserstoffring mit 6 Kohlenstoffatomen vom 1,2-Cyclohexan-Typ umfassen.

9. Thermoplastisches elastomeres Copolymer nach Anspruch 8, **dadurch gekennzeichnet, dass** das Dienelastomer B die folgenden Einheiten UA, UB, UC und UD umfasst, die statistisch in dem Elastomer verteilt sind:

UA) $-CH_2-CH_2-$ gemäß einem Molprozentanteil von m %
UB) $-CH_2-R_6C=CR_7-CH_2-$ gemäß einem Molprozentanteil von n %
UC)

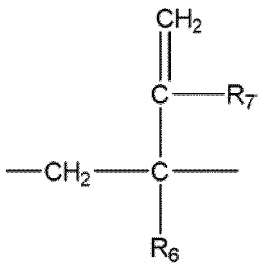

gemäß einem Molprozentanteil von o %
UD)

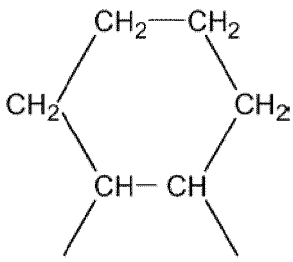

gemäß einem Molprozentanteil von p %

$R_6$ und $R_7$ gleich oder verschieden sind und jeweils für ein Wasserstoffatom, einen Methylrest oder einen Phenylrest, der gegebenenfalls in ortho-, meta- oder para-Position durch einen Methylrest substituiert ist, stehen,
$m \geq 50$,
$0 < o + p \leq 25$,
$n + o > 0$,
wobei m, n, o und p Zahlen von 0 bis 100 sind,
wobei die jeweiligen Molprozentanteile von m, n, o und p auf der Basis der Summe von m + n + o + p, die gleich 100 ist, berechnet werden.

**10.** Thermoplastisches elastomeres Copolymer nach Anspruch 9, **dadurch gekennzeichnet, dass** das Dienelastomer B außerdem Einheiten UE umfasst, die statistisch in dem Elastomer verteilt sind:
UE)

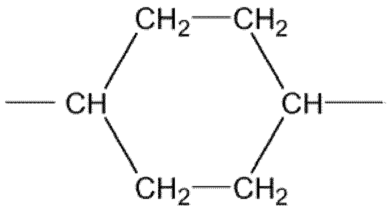

gemäß einem Molprozentanteil von q%

$$o + p + q \geq 10,$$

$$q \geq 0,$$

wobei die jeweiligen Molprozentanteile von m, n, o, p und q auf der Basis der Summe von m + n + o + p + q, die gleich 100 ist, berechnet werden.

**11.** Thermoplastisches elastomeres Copolymer nach Anspruch 9 oder 10, **dadurch gekennzeichnet, dass** das Dienelastomer B außerdem Einheiten UF umfasst, die statistisch in dem Elastomer verteilt sind:
UF)

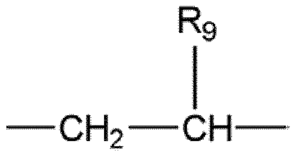

gemäß einem Molprozentanteil von r%

wobei $R_9$ für einen Alkylrest mit 1 bis 4 Kohlenstoffatomen oder einen Arylrest steht,
$0 \leq r \leq 25$, vorzugsweise$0 \leq r \leq 10$,
wobei die jeweiligen Molprozentanteile von m, n, o, p, und r und eventuell q auf der Basis der Summe von m + n + o + p + r + eventuell q, die gleich 100 ist, berechnet werden.

**12.** Copolymer nach einem der vorhergehenden Ansprüche, wobei das Dienelastomer eine zahlenmittlere Molmasse von 10 kg/mol bis 500 kg/mol aufweist.

**13.** Thermoplastisches elastomeres Copolymer nach einem der Ansprüche 2 bis 12, **dadurch gekennzeichnet, dass** sich die Pfropfanteile von Polymeren von monomaleinsäureanhydridterminiertem isotaktischem Polypropylen ableiten.

**14.** Thermoplastisches elastomeres Copolymer nach einem der Ansprüche 2 bis 13, **dadurch gekennzeichnet, dass** sich die Pfropfanteile von teilkristallinen Polymeren mit einer zahlenmittleren Molmasse von weniger als 10.000 g/mol, vorzugsweise im Bereich von 1000 bis 8500 g/mol, und einem Schmelzpunkt im Bereich von 100 °C bis 180 °C ableiten.

**15.** Verfahren zur Herstellung eines Copolymers nach einem der Ansprüche 1 bis 14, **dadurch gekennzeichnet, dass** es die Umsetzung von

- einem Dienelastomer A, das Einheiten aus der Polymerisation eines konjugierten Diens umfasst und außerdem entlang der Kette Funktionen, die mit der Endgruppe des Polypropylens reagieren können, umfasst;
- teilkristallinem Polypropylen, das mit einer Endgruppe funktionalisiert ist, die mit den seitenständigen Funktionen des Elastomers reagieren kann,

in Elastomer/Polypropylen-Massenanteilen im Bereich von 60/40 bis 95/5 in Lösung oder durch Inkontaktbringen in der Schmelze in Abwesenheit von Lösungsmittel, insbesondere in einem Extruder, umfasst.

**16.** Zusammensetzung, umfassend mindestens 50 Massen-% eines Copolymers nach einem der Ansprüche 1 bis 14 oder eines durch das Verfahren nach Anspruch 15 erhaltenen Copolymers.

**17.** Zusammensetzung, umfassend die durch das Verfahren nach Anspruch 15 erhaltene Mischung.

**18.** Reifen, wobei eines seiner Aufbauelemente eine Zusammensetzung nach Anspruch 16 oder 17 umfasst.

## Claims

**1.** Diene/polypropylene thermoplastic elastomer copolymer, **characterized in that** it consists of a backbone, said backbone being derived from a diene elastomer, and **in that** it comprises from 5% to 50% by weight, relative to the total weight of the copolymer, of pendent semicrystalline polypropylene groups distributed along the backbone.

**2.** Thermoplastic elastomer copolymer according to Claim 1, **characterized in that** the semicrystalline polypropylene

groups are grafted to the backbone and the copolymer is obtained by reaction:

- of a diene elastomer A comprising pendent functional groups along said elastomer, which are able to react with the end group of the polypropylene; preferably epoxide groups
- of semicrystalline polypropylene functionalized by an end group able to react with the pendent functional groups of the diene elastomer.

3. Thermoplastic elastomer copolymer according to Claim 2, **characterized in that** the diene elastomer A is the product of the copolymerization of at least one conjugated diene monomer and at least one monomer bearing said functional group.

4. Thermoplastic elastomer copolymer according to Claim 2, **characterized in that** the diene elastomer A is the product of the functionalization by grafting of a diene elastomer B.

5. Thermoplastic elastomer copolymer according to Claim 4, **characterized in that** the epoxide groups are attached to the diene elastomer A via a silicon atom and **characterized in that** said epoxide group corresponds to the following formula I:

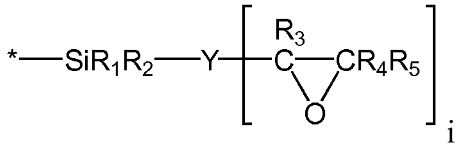

Formula I

where

- $R_1$ and $R_2$, which are identical or different, each represent a $C_1$-$C_5$ alkyl, $C_6$-$C_{14}$ aryl, or $C_7$-$C_{11}$ aromatic alkyl group;
- $R_3$, $R_4$ and $R_5$, which are identical or different, each represent a hydrogen atom or a $C_1$-$C_5$ alkyl, $C_6$-$C_{14}$ aryl, or $C_7$-$C_{11}$ aromatic alkyl group, and preferentially a hydrogen atom;
- Y is a bridging group with a valency equal to i+1; and
- i is an integer with a value from 1 to 3, and preferentially 1;
- * denotes an attachment point to the elastomer chain.

6. Thermoplastic elastomer copolymer according to any one of Claims 4 to 5, **characterized in that** the diene elastomer B contains 1,3-diene units, in particular butadiene or 2-methyl-1,3-butadiene.

7. Thermoplastic elastomer copolymer according to any one of Claims 4 to 6, **characterized in that** the diene elastomer B is selected from:

- a homopolymer of 1,3-diene,
- a random copolymer resulting from the polymerization of one or more 1,3-dienes with one or more compounds chosen from aliphatic $\alpha$-monoolefins, aromatic $\alpha$-monoolefins and ethylene.

8. Thermoplastic elastomer copolymer according to Claim 7, **characterized in that** the diene elastomer B is a random copolymer resulting from the polymerization of at least one or more 1,3-dienes and ethylene and **characterized in that** it comprises units which have, as subunit, a divalent hydrocarbon-based ring containing 6 carbon atoms, of 1,2-cyclohexane type.

9. Thermoplastic elastomer copolymer according to Claim 8, **characterized in that** the diene elastomer B comprises the following units UA, UB, UC and UD, distributed randomly within the elastomer,

| | | |
|---|---|---|
| UA) | $-CH_2-CH_2-$ | according to a molar percentage of m% |
| UB) | $-CH_2-R_6C=CR_7-CH_2-$ | according to a molar percentage of n% |

(continued)

UC) 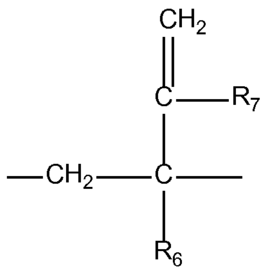 according to a molar percentage of o%

UD) 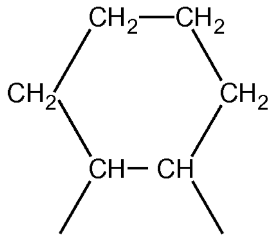 according to a molar percentage of p%

$R_6$ and $R_7$, which are identical or different, each represent a hydrogen atom, a methyl radical or a phenyl radical which is unsubstituted or substituted in the ortho, meta or para position by a methyl radical,

$m \geq 50$

$0 < o + p \leq 25$

$n + o > 0$

m, n, o and p being numbers ranging from 0 to 100

the respective molar percentages of m, n, o and p being calculated on the basis of the sum of m + n + o + p, which is equal to 100.

10. Thermoplastic elastomer copolymer according to Claim 9, **characterized in that** the diene elastomer B also comprises units UE distributed randomly within the elastomer:

UE) 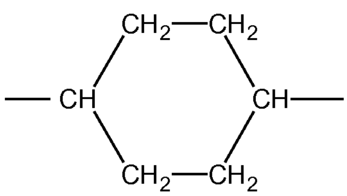 according to a molar percentage of q%

$$o + p + q \geq 10$$

$$q \geq 0$$

the respective molar percentages of m, n, o, p and q being calculated on the basis of the sum of m + n + o + p + q, which is equal to 100.

11. Thermoplastic elastomer copolymer according to Claim 9 or 10, **characterized in that** the diene elastomer B also comprises units UF distributed randomly within the elastomer:

UF)

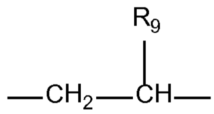

according to a molar percentage of r%

$R_9$ denoting an alkyl radical having from 1 to 4 carbon atoms or an aryl radical,
$0 \leq r \leq 25$, preferably $0 \leq r \leq 10$,
the respective molar percentages of m, n, o, p and r, and optionally q, being calculated on the basis of the sum of m + n + o + p + r + optionally q, which is equal to 100.

**12.** Copolymer according to any one of the preceding claims, wherein the diene elastomer has a number-average molar mass ranging from 10 kg/mol to 500 kg/mol.

**13.** Thermoplastic elastomer copolymer according to any one of Claims 2 to 12, **characterized in that** the grafts are derived from maleic monoanhydride-terminated isotactic polypropylene polymers.

**14.** Thermoplastic elastomer copolymer according to any one of Claims 2 to 13, **characterized in that** the grafts are derived from semicrystalline polymers having a number-average molar mass of less than 10 000 g/mol, preferably ranging from 1000 to 8500 g/mol, and a melting point ranging from 100°C to 180°C.

**15.** Process for producing a copolymer according to one of Claims 1 to 14, **characterized in that** it comprises the reaction:

- of a diene elastomer A comprising units resulting from the polymerization of a conjugated diene and also comprising functions which are able to react with the end group of the polypropylene, which are pendent along the chain;
- of semicrystalline polypropylene functionalized by an end group able to react with the functions present on the elastomer

in proportions by weight of elastomer / polypropylene ranging from 60/40 to 95/5 in solution, or by bringing into contact in the melt state, in the absence of solvent, in particular in an extruder.

**16.** Composition comprising at least 50% by weight of a copolymer according to any one of Claims 1 to 14 or obtained by the process according to Claim 15.

**17.** Composition comprising the mixture obtained by the process according to Claim 15.

**18.** Tyre, one of the constituent elements of which comprises a composition according to Claim 16 or 17.

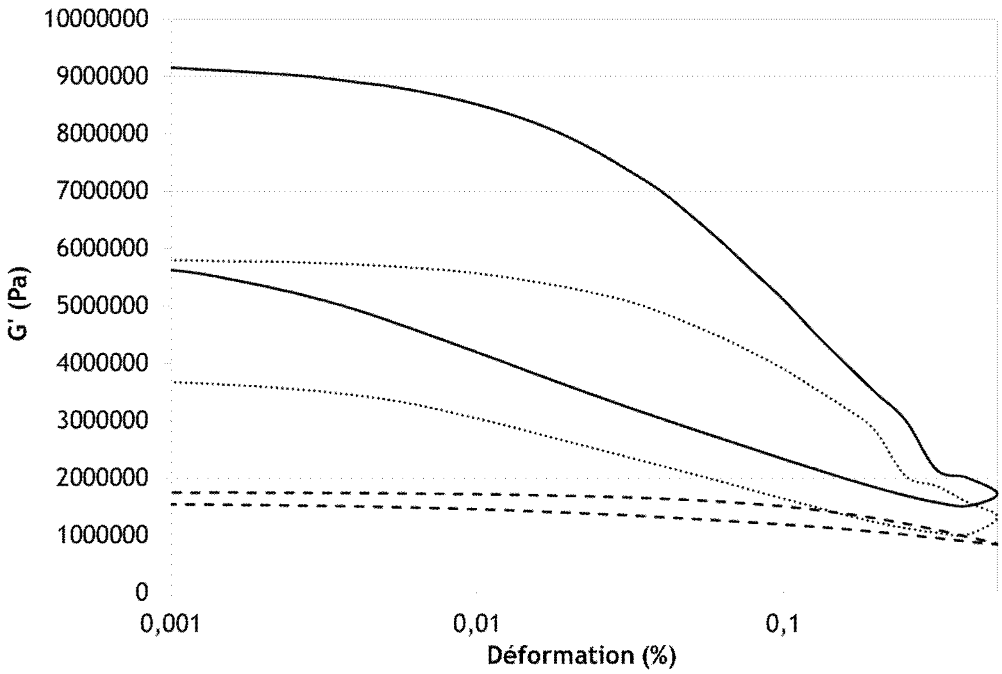
10000000
9000000
8000000
7000000
6000000
5000000
4000000
3000000
2000000
1000000
0
G' (Pa)
0,001
0,01
0,1
Déformation (%)

FIG. 1

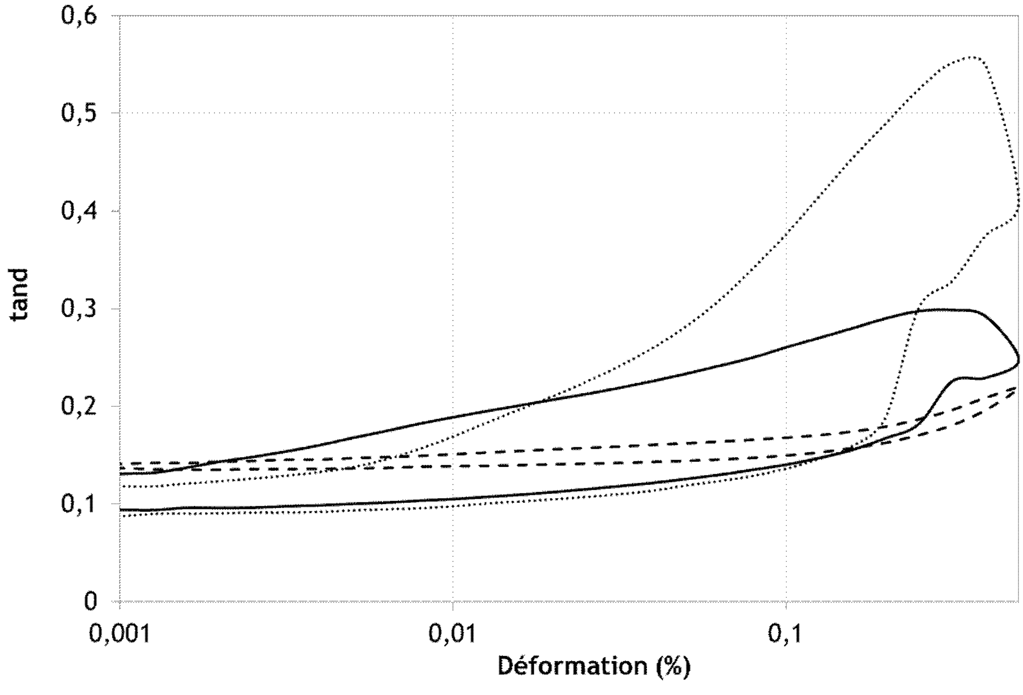
0,6
0,5
0,4
0,3
0,2
0,1
0
tand
0,001
0,01
0,1
Déformation (%)

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5342886 A
- FR 2815037
- FR 1362946
- EP 1092733 A
- WO 2005028256 A
- EP 1092731 A1
- EP 1554321 A1
- EP 1656400 A1
- EP 1829901 A1
- EP 1954705 A1
- EP 1957506 A1
- US 7790793 B2


### Littérature non-brevet citée dans la description


- *Macromol. Symp.,* 2013, vol. 330, 42-52
- *Polymer,* 2002, vol. 43, 2671-2676